# EUROPEAN PATENT APPLICATION

(11) **EP 1 627 685 A1**
(43) Date of publication of application: **22.02.2006**
(21) Application number: 05017865.6
(22) Date of filing: 17.08.2005
(51) Int. Cl.: B01L 3/00, G01N 35/10, G01N 21/00

(54) **Microfuidic-chip for chemical analysis based on electrowetting**

(30) Priority: 17.08.2004 JP 2004237479
(71) Applicant: Hitachi High-Technologies Corporation, Tokyo 105-8717 (JP)
(72) Inventor: Yamakawa, Hironobu c/o Hitachi, Ltd., Chiyoda-ku Tokyo 100-8220 (JP); Enoki, Hideo c/o Hitachi, Ltd., Chiyoda-ku Tokyo 100-8220 (JP); Harada, Kunio c/o Hitachi, Ltd., Chiyoda-ku Tokyo 100-8220 (JP); Adachi, Sakuichiro c/o Hitachi, Ltd., Chiyoda-ku Tokyo 100-8220 (JP); Mimura, Tomonori Hitachi High-Technologies Corp., Hitachinaka-shi Ibaraki 312-8504 (JP)
(74) Representative: Beetz & Partner

(57) **Abstract**

A chemical analysis apparatus is equipped with analysis sections having openings, means for supplying samples or reagents from the openings, means for combining and mixing samples with reagents to obtain droplets as liquids to be measured, and means for measuring the physical properties of the liquids to be measured during reaction or after completion of reaction. Furthermore, plate members are provided facing each other in analysis sections and a plurality of electrodes are provided on the plate member faces that face each other. Voltage is applied from the plurality of electrodes to the droplets of the samples and the reagents.

## Description

### Background of the Invention

The present invention relates to a chemical analysis apparatus appropriate for analyzing small quantities of substances contained in fluid or liquid samples, particularly samples of biological or body fluids or liquids.

US 6 565 727 discloses a method by which a plate member having rows of a plurality of electrodes that are insulated from each other is provided facing a single common electrode plate, and droplets of small volume in a filling liquid that fills the gap between two plates are transported along the electrode rows by consecutively applying a voltage to the electrode rows so as to generate an attraction between the electrode faces and droplets.

The following problems exist concerning the application of the technology disclosed in US 6 565 727 to a chemical analysis apparatus for analyzing small quantities of substances contained in fluid or liquid samples, particularly samples of biological or body fluids or liquids.

First, the range of small volumes of liquids (liquids for analysis such as samples and reagents) is determined based on the gap between two plate members and the size of the electrodes composing the electrode rows, so that it is difficult to handle wide-ranging liquid volumes of liquids for analysis.

Second, each liquid for analysis has a different specific gravity (density). Thus, depending on the value of the specific gravity of a liquid for analysis compared with the filling liquid, the location of a droplet is biased towards either one of the electrode plates. Attraction between electrode faces and droplets occurs by a change in the hydrophilicity and/or the water-repellency of the liquids. Hydrophilicity and/or water-repellency of electrodes on either one of the plates alone can be controlled. Thus, handling thereof may be difficult.

Third, to dispense a liquid that is temporarily retained in a reservoir for a liquid for analysis, a droplet is separated and formed from the liquid in the reservoir. The states of liquid separation differ depending on the physical properties of various liquids, so that the droplets vary in the liquid volume to a greater extent. Thus, there is a concern in this case that the dispensing accuracy may be lowered.

Fourth, there is a concern that the mixing efficiency is poor because a sample is mixed with a reagent only by transporting a droplet so that it collides with the reagent and swinging the mixture.

### Brief Summary of the Invention

In view of the above problems, an object of the present invention is to provide a chemical analysis apparatus whereby liquids for analysis varying in volumes can be analyzed, a liquid for analysis having a specific gravity lower than that of a filling liquid can be analyzed, dispensing with high accuracy is realized, and higher mixing accuracy is achieved.

The above object is achieved according to claim 1. The dependent claims relate to preferred embodiments of the concept of the present invention.

To achieve the above object, the chemical analysis apparatus of the present invention is equipped with analysis sections having openings, means for supplying samples and reagents from the openings, means for combining and mixing the samples with the reagents to obtain droplets as liquids to be measured, and means for measuring the physical properties of the liquids to be measured during reaction or after completion of reaction. Furthermore, analysis sections are composed of plate members provided facing each other, wherein a plurality of electrodes are provided on plate member faces that face each other, and voltage is applied from the plurality of electrodes to the droplets of the samples and the reagents so as to control the wettability of the droplets.

The droplets containing the samples and the reagents are located between the plate members provided facing each other. The contact angles of the droplets vary by application of electric fields to the electrodes, thereby enabling the movement of the droplets on the plurality of electrodes. Furthermore, the samples and the reagents supplied from the openings of the analysis sections can move in the form of droplets with volumes smaller than those of the reagents and the samples when they are in the vicinity of the openings.

Furthermore, specifically, steps are created on electrode plates or electrodes are made in the form of projections, so that the electrodes can be in contact with even small volumes of liquids. Alternatively, dotted electrodes are distributed and provided, so that the electrodes can always be in contact with liquids. Hence, it becomes possible to control the hydrophilicity and/or water-repellency of even small volumes of liquids, and an apparatus capable of analysis even when the liquid volume is small can be provided.

Furthermore, through provision of ground electrodes and applicator electrodes in a manner such that the order thereof on the top plate and that on the bottom plate are opposite, an apparatus for analyzing liquids for analysis having specific gravities smaller than those of filling liquids can be provided. Moreover, a chemical analysis apparatus whereby highly accurate dispensing is realized can be provided by dividing liquids for analysis into a large number of small droplets and dispensing the droplets at many separate times, processing electrodes in the shape of droplets, correcting data by image processing, producing dispensing nozzles with electrodes, and the like.

The chemical analysis apparatus of the present invention can realize analysis of liquids for analysis varying in liquid volume, analysis of liquids for analysis having specific gravities smaller than those of filling liquids, highly accurate dispensing, and chemical analysis with high mixing accuracy.

### Brief Description of the Drawings

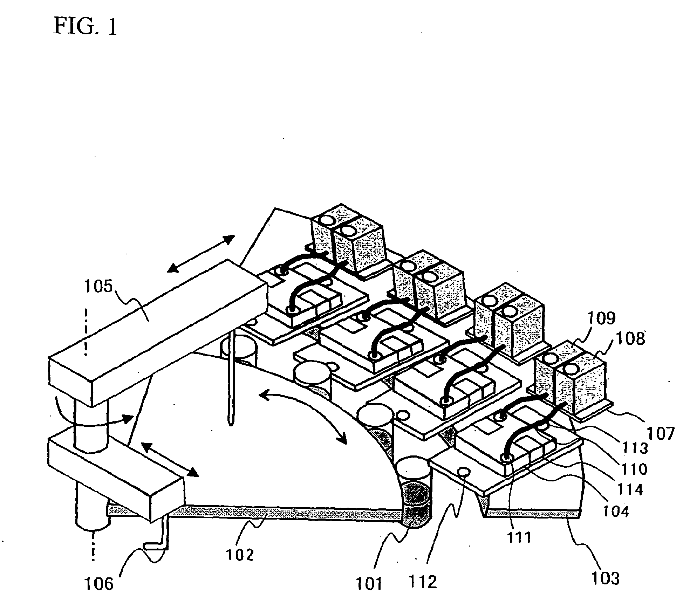

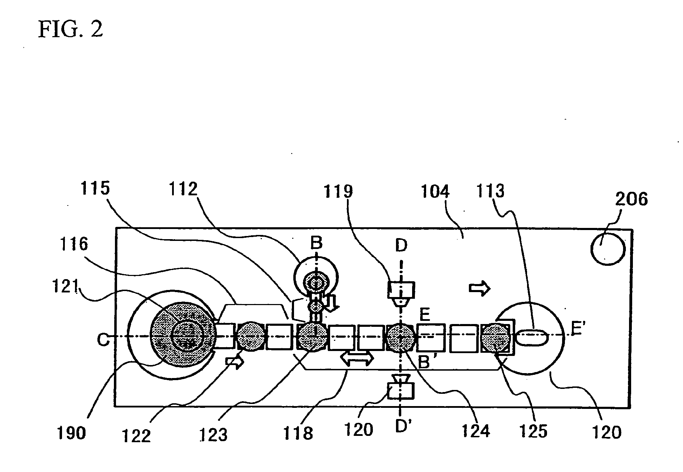

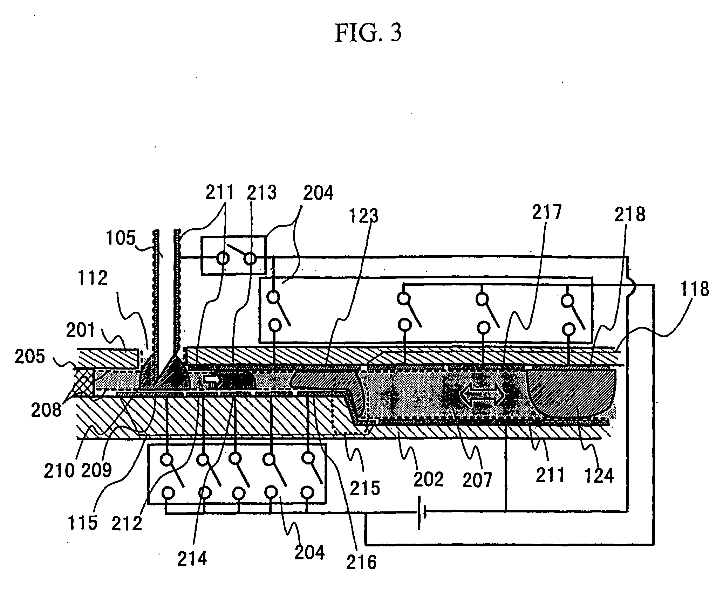

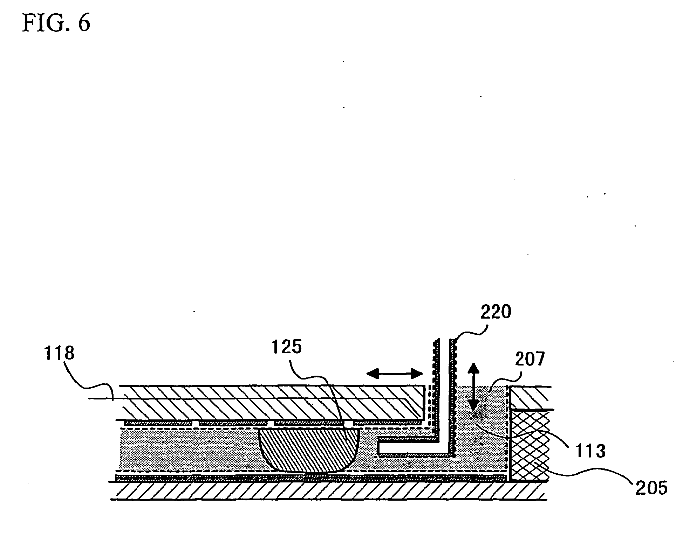

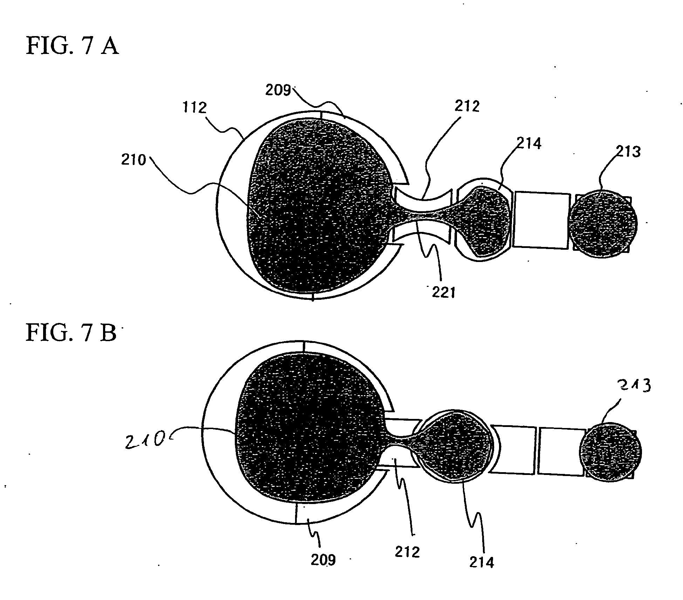

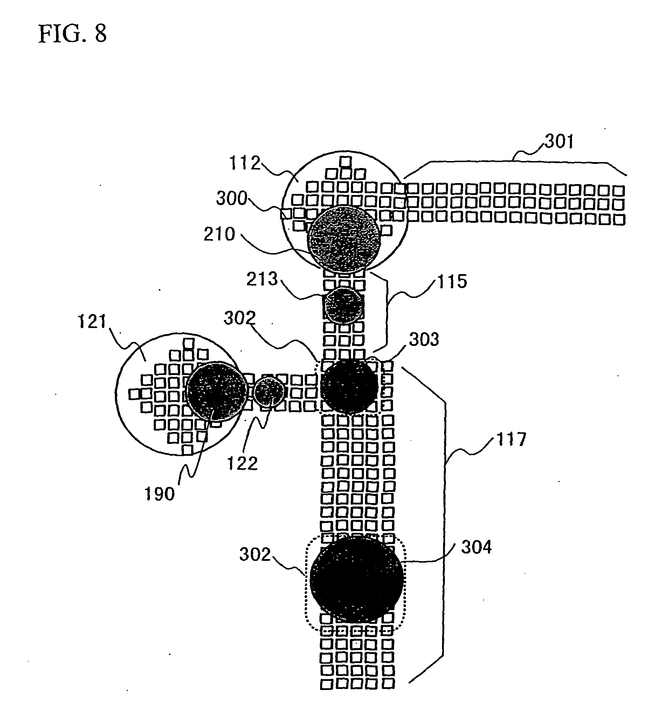

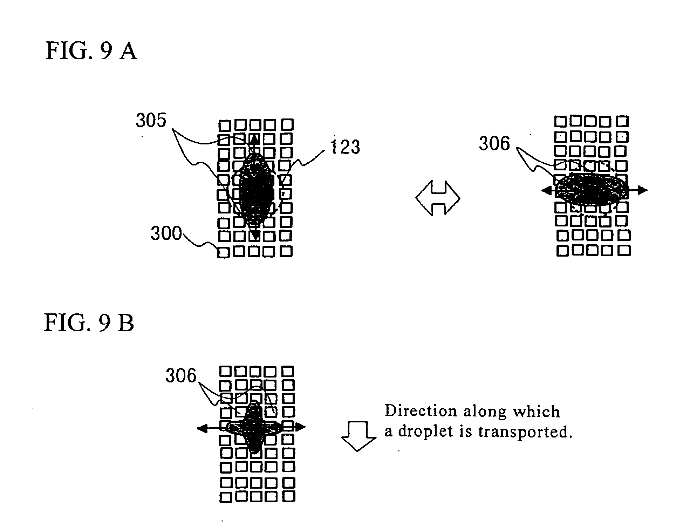

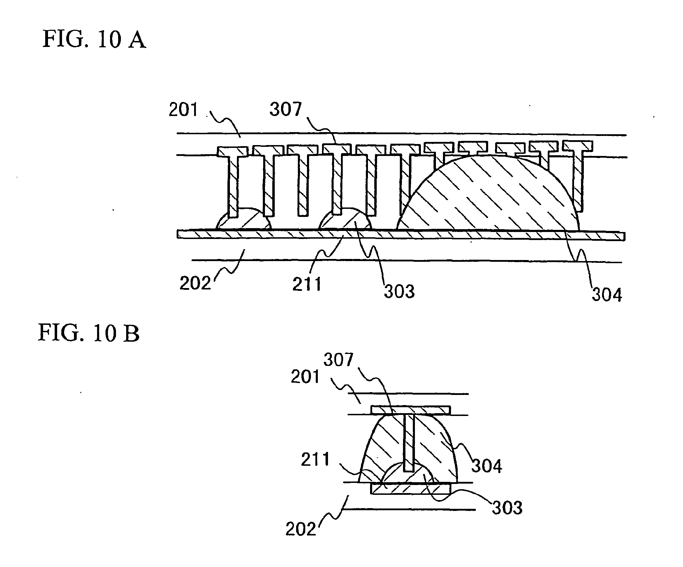

Fig. 1 is a perspective view of an embodiment of the chemical analysis apparatus according to the present invention. Fig. 2 is a top view of substrates for analysis to be used for the chemical analysis apparatus. Fig. 3 and Fig. 6 are sectional views of the substrates for analysis. Fig. 7 and Fig. 8 are top views of an embodiment of electrodes to be used for substrates for analysis. Fig. 9 explains how droplets become deformed on electrode rows. Fig. 10 explains how droplets become deformed.

### Detailed Description of the Invention

In the following, embodiments of the present invention will be described below based on Figs. 1 to 7.

### Embodiment 1

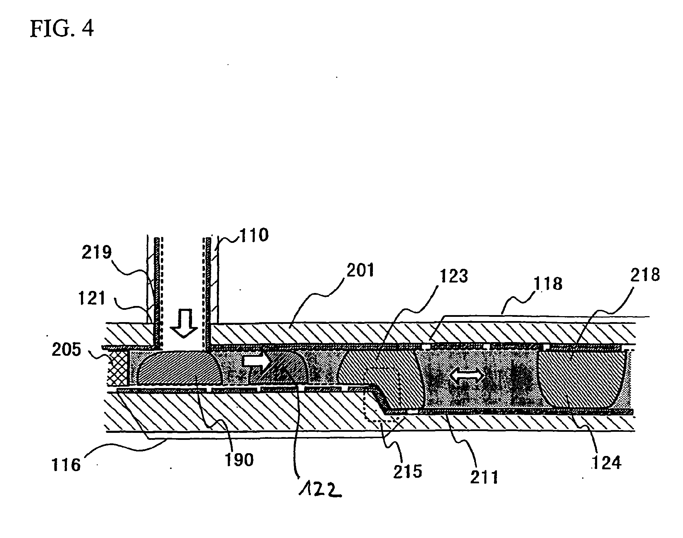

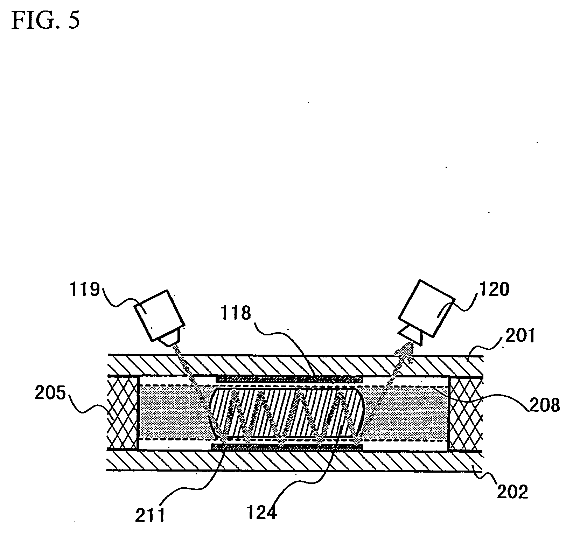

Fig. 1 is a schematic perspective view of the entire system. Fig. 2 shows a top view of substrates for analysis. Fig. 3 is a sample-dispensing section and shows a sectional view taken along the line B-B' in Fig. 2. Fig. 4 is a reagent-dispensing section and shows a sectional view taken along the line C-B' in Fig. 2. Fig. 5 is a detection section and shows a sectional view taken along the line D-D' in Fig. 2. Fig. 6 is a waste fluid section and shows a sectional view taken along the line E-E' in Fig. 2.

The chemical analysis apparatus is composed of, as shown in Fig. 1, sample cups 101 containing e.g. biological samples such as sera, a sample disc 102 that rotationally moves the sample cups 101, substrates for analysis 104 for analyzing samples placed on an analysis disc 103, a sample-dispensing probe 105 for dispensing samples from the sample cups to the substrates for analysis, and a waste-fluid shipper 106 for removing liquids that have been analyzed by suction and discarding the liquids outside. A reagent bottle 108 and an oil bottle 109 placed on a bottle table 107 having a cooling function are piped via a tube 110 to each substrate for analysis 104 with a piping connector 111 provided with an electromagnetic valve. On the upper surface of each substrate for analysis 104, a detection unit 114 is provided. Each substrate for analysis 104 is opened to the outside via two openings including a sample port 112 and a waste-fluid port 113.

Procedures for analysis are as described below. Samples are dispensed from the sample cups 101 using the sample-dispensing probe 105 to the substrates for analysis 104, and reagents are dispensed from the reagent bottles 108 through the tubes 110. In each substrate for analysis 104, the two liquids are mixed, and the mixed liquid is subjected to absorbance analysis and the like. After such analysis, the liquid is discharged to the outside using a waste-fluid shipper 106.

As shown in Figs. 2 and 3, each substrate for analysis consists of two substrates including an upper substrate 201 and a lower substrate 202. At a part of the lower substrate 202, a large number of electrodes having sides with lengths between approximately several millimeters and several micrometers are aligned to form, for example, a sample electrode row 115 or a reagent electrode row 116 and are coated with a water-repellent and insulating film 208. The electrodes are each connected via a switching circuit 204. Here, a case is shown wherein the mixed liquid volume ratio of a sample to a reagent indicates that the reagent amount is greater than that of the sample. The electrode sizes differ in accordance with the liquid volume ratios. The gap between the two substrates is maintained by a spacer 205, so that the substrates have a specific distance from each other. Oil is supplied from an oil port 206 according to need. The water-repellent and insulating film may be composed of a water-repellent film and an insulating film.

A method of producing the aforementioned lower substrate 202 involves the deposition, for example, of thin-film electrodes having conductivity, such as those composed of Cr, Ti, Al, or ITO, on an insulated substrate such as glass or quartz by vapor deposition, sputtering, CVD, or the like. On the resultant electrodes, an organic insulating film such as of Parylene (trade name) of Three Bond Co., Ltd. or an inorganic insulating film such as of SiO₂ is formed by vapor deposition, sputtering, CVD, or the like. The insulating film is then coated with a fluoro-based water-repellent film so as to produce the lower substrates 202. As a material for the water-repellent film, Teflon AF1600 (trade name) of Du Pont Kabushiki Kaisha, Cytop (trade name) of ASAHI GLASS CO., LTD., or the like can be used. Furthermore, the upper substrates 201 are produced by forming a transparent conductive film such as of ITO on one side as counter electrodes 211, and the resultant electrodes are coated with the above water-repellent film.

Between the substrates (of each substrate for analysis 104), for example, inert oil 207 with a high chemical resistance, such as silicon oil, FOMBLIN (trade name), or KRYTOX OIL (trade name), is supplied. At this time, a film composed of the oil 207 covers the upper and the lower substrates, so that it becomes difficult for a sample droplet 213 or the like to be in contact with the substrates. The substrates for analysis 104, between which there exists a gap to be filled with oil 207, are placed on plane plates, so that the oil 207 does not naturally flow out. The oil 207 can be supplied at relatively low cost based on height differences, and there is no need to supply oil 207 in every analysis. At this time, it becomes difficult for liquids to remain at positions with which the liquids are in contact. Thus, carry-over, which has been a problem of conventional analysis apparatuses, is addressed, enabling analysis with high accuracy.

Operations concerning the substrates for analysis 104 will now be described in detail. First, a sample dispensed to each sample port 112 by the sample-dispensing probe 105 (not shown in Fig. 2) is in a state of being stored in each sample port 112. At this time, a dispensed sample 210 on a sample electrode 209 exists on the water-repellent and insulating film, so that the sample 210 is repelled from the surfaces of the upper and lower substrates and is round in shape. Next, switching circuits 204 are operated to apply a voltage between the sample-dispensing electrode 209 and the counter electrodes 211. After the wetting status of the sample changes, the sample liquid develops and extends so as to come into contact with a sample electrode 212. Next, the switching circuits are operated to turn off the sample electrode 209 to eliminate the electric field and to apply a voltage between the sample electrode 212 and the counter electrodes 211. The dispensed sample 210 is partially constricted at an appropriate position, moves away from the sample-dispensing electrode 209, develops, and then extends to the sample-dispensing electrode 212. Next, the switching circuits 204 are operated to turn off the sample-dispensing electrode 212 to eliminate the electric field and to apply a voltage to a sample-dispensing electrode 214. The liquid is divided at an appropriate position so as to form a sample droplet 213. The sample droplet 213 moves onto the sample-dispensing electrode 214. In this manner, through switching the switching circuits 204 successively, the sample droplet 213 is transported in each substrate for analysis 104 along each sample electrode row 115. Furthermore, the sample droplet 213 is successively separated from each sample port 112. Thus, the entire sample is dispensed in the form of a large number of sample droplets 213.

If the viscosity of a sample liquid is high or the surface tension of the same is small, the effect of changing the wettability by switching of electric fields will be small. Thus, it becomes difficult for the liquid to develop and extend to the next electrode and to be constricted. Therefore, it becomes also difficult to separate sample droplets from the dispensed sample. At this time, the position at which a droplet is separated from a liquid differs at every separation, so that sample droplets will vary in size. Hence, there is a concern that the sample dispensing accuracy would become lowered. As shown in Fig. 7A, an electrode at a position 221 where a liquid is constricted, such as a sample electrode 212, is shaped to have a crevice conforming to the shape of the constricted liquid at the position 221. Thus, the constricted portion of the liquid can be made larger, thereby facilitating separation of droplets from the liquid. Alternatively, as shown in Fig. 7B, an electrode for the formation of a sample droplet 213, such as a sample electrode 214, is shaped in conformation with the droplet size. Thus, the formation of the sample droplet 213 can be promoted. In this manner, it becomes easier to separate droplets from a dispensed sample 210, so as to be able to improve the sample dispensing accuracy. Regarding the curved part of such an electrode with a shape conforming to the droplet size, for example, it is desirable that the curvature radius be smaller than that of an electrode 212 closest to the opening so that the electrode can conform to the curve of a constricted liquid. Conversely, if the curvature radius is too small, the tolerance range of the droplet deformation degree is exceeded. Thus, it is desirable that such a curved part has a curvature radius larger than the size of the adjacent electrode.

In the present invention, as described above, a sample dispensed from the sample-dispensing probe is dispensed in small volumes. Generally, dispensing of a sample in small volumes results in improved dispensing accuracy. For example, according to J.C. Miller, the accuracy is improved in inverse proportion to the square root of N in a case where a sample is dispensed N separate times, where the sample is dispensed always in the same volume with the same dispensing accuracy. When dispensing a sample using a conventional analysis apparatus, the minimum volume of a sample to be dispensed is approximately 1 µl. Thus, it has been impossible to dispense 1 µl or less of a sample in smaller volumes. However in the present invention, through the use of a smaller electrode, a sample can be dispensed in the form of droplets in even smaller volumes, and the dispensing accuracy can be improved by dispensing the sample in such smaller volumes.

As described above and as shown in Fig. 3, the sample-dispensing probe 105 is also coated with a water-repellent and insulating film 208 similar to the case of the substrate, so that the probe has water repellency. Furthermore, an electric field is applied through the switching circuits 204, so that the wettability can be controlled. First, a dispensed sample 210 is dispensed from the sample-dispensing probe 105 between the substrates (of each substrate for analysis 104). Next, the sample-dispensing probe 105 is lifted. In the case of a conventional analysis apparatus, when a sample-dispensing probe is lifted, the sample liquid 210 is partially moved away by such a probe. Thus, the liquid should be dispensed in consideration of the volume of such a liquid that is moved away by a probe. Hence, one problem was that the volume of a sample to be used tends to increase. It has also been problematic that the analysis accuracy is also lowered because the volume of a sample that is moved away by a probe is unstable. However, with the design as shown in Fig. 3, when the sample-dispensing probe 105 is lifted, the voltage is controlled between the counter electrode 211 of the sample-dispensing probe 105 and a sample electrode 212, so that a role equivalent to that of the counter electrode 211 of the upper substrate 201 can be played. Hence, the wettability of a dispensed sample liquid is controlled so that a droplet can be separated more easily from the liquid. Thus, the problem of a sample liquid being partially moved away by a probe is addressed, because no sample liquids remain attached to the sample-dispensing nozzle. Furthermore, it becomes possible to reduce the volume of a sample to be used and to improve the analysis accuracy. Moreover, when the electric current is monitored by providing an ammeter (not shown) between the sample-dispensing probe 105 and the sample electrode 209, it may be seen that an extremely small electric current flows in the presence of droplets. Thus, whether or not droplets are attached can be confirmed, thereby contributing to the improvement of dispensing accuracy.

Glass or the like is used as material for the upper substrates 201, transparent electrodes (e.g., ITO) are used as the counter electrodes 211, and cameras (not shown) are provided on the upper sides of the substrates for analysis 104. Therefore, the shape of each sample droplet 213 dispensed from each sample port 112 can be monitored, and a two-dimensionally-spreading image of a sample droplet can be obtained. At this time, the cross-sections of droplets between plate members will be uniform. The volume of a droplet can be easily obtained with high accuracy by determining the area of the obtained droplet image as a cross-sectional area and then multiplying the distance between the plate members by such a cross-sectional area. Accordingly, the problem of lowered monitoring accuracy when three-dimensional images of droplets are obtained, which has been a problem connected with monitoring with a conventional analysis apparatus, is addressed. Furthermore, the dispensing of samples with high accuracy, and the analysis with high accuracy become possible. Moreover, by producing a sample-dispensing electrode that has a size of several micrometers, it becomes possible to set the volume of a sample droplet in the nanoliter range. Therefore, adjustment with high accuracy is made possible by monitoring when excesses or deficiencies are generated.

In the meantime, as shown in Fig. 4, a reagent is distributed to each upper substrate 201 via each tube 110. As shown in Fig. 1, the reagent bottles 108 are provided on the upper sides of the substrates for analysis 104, so that reagents can be supplied based on height differences. Reagents are transported to reagent ports 121 via electromagnetic valves within connector units 111 by water-repellent piping connectors 219. The necessary volumes of reagents are supplied to the substrates for analysis by controlling intervals of opening and closing of the electromagnetic valves. Similar to the sample ports 112, the reagent ports 121 are provided with reagent electrode rows 116 connected to the switching circuits 204 (not shown in Figs. 1 and 4), so that a reagent droplet 122 is separated from a dispensed reagent 190 in a plurality of times and then transported. Subsequently, the reagents are combined with sample liquids at mixing electrodes 216 to result in the necessary volumes.

A sample liquid and a reagent are mixed as follows. First, here the reagent droplet 122 is transported to a mixing electrode. Next, the sample droplet 213 is transported and caused to collide at each mixing electrode A216 with the reagent droplet 122 kept ready for mixing on the mixing electrode or with a mixed droplet 123 that has been previously mixed to some extent. Furthermore, the switching circuits 204 are switched to a mixing electrode 217 and a mixing electrode 218 (Fig. 3). Thus, the mixed droplet 123 is transported back and forth in horizontal direction, that is, in parallel with each substrate for analysis 104, thereby generating a flowing movement within the droplet which promotes mixing. The volume of a sample droplet to be collided with a reagent, that is, the number of times a sample droplet is separated from a sample port, is determined depending on the mixing ratio as determined in analysis protocols.

In general, when volumes of two liquids to be mixed are increased, it will be difficult for internal flowing movement to take place, and mixing will also be difficult. For example, in the case of conventional analysis apparatuses, it has been attempted to address such a problem through longer mixing times. However, because of insufficient mixing even with longer mixing times, there has been the problem of lowered analysis accuracy. However, as described above, in the present invention, mixing is greatly facilitated because of sufficient mixing at the droplet level. Thus, the mixing efficiency is improved, so that it becomes possible to shorten the analysis time and to improve the analysis accuracy.

When the specific gravity of a liquid is lower than that of inert oil 207 that fills the gap between the substrates for analysis, a droplet floats and becomes attached to the upper substrate side. At this time, as with the sample electrode 209 in Fig. 3 and the like, when electrodes are provided on the lower substrate 202 side of the droplet, followed by switching to the substrate, the wettability will not change significantly. Conversely, by separately providing electrodes on the upper substrate 201 side and with the use of the lower substrate 202 side as counter electrodes, it becomes possible to handle droplets with high accuracy in a similar manner as above. Moreover, when the volume of a droplet is increased, the aspect ratio of the horizontal direction to the depth (vertical) direction of the cross-section of the substrates for analysis will be increased. Furthermore, the resistance to the movement of droplets will increase. Thus, it becomes difficult to handle droplets only by controlling the surface tension through the application of an electric field. Furthermore, as in Figs. 3 and 4, a step 215 is provided to change the depth (vertical) direction and to lower the aspect ratio, thereby reducing the resistance to the movement of droplets. Thus, the effect of a change in the surface tension will increase, making it possible to handle the mixed droplet 123 in a relatively larger volume. When such a change in the depth (vertical) direction is larger than, for example, the size of an electrode, it becomes difficult for a droplet to be in contact with both the top and bottom plates. It also becomes difficult to apply an electric field between droplets. Conversely, when the step is smaller than about a half of the distance between electrodes, almost no effect of such a step can be expected.

The mixed droplet 123 is transported to a detection section provided at a mixing electrode row 118. For example, when detection is conducted by absorbance analysis, it is difficult to irradiate a droplet with light so that light passes through the droplet, because each substrate for analysis is very narrow in depth (vertical) direction. Furthermore, the droplet is short in the horizontal direction, so that the light path is shortened and the analysis accuracy is lowered. Irradiation is also difficult because of the presence of electrodes in the vertical direction of each substrate for analysis. Furthermore, since each substrate is short in depth (vertical) direction, the light path is short, and the analysis accuracy is lowered. Hence, in the present invention, as shown in Fig. 5, irradiation is performed such that light enters at an angle with respect to each substrate from a light source 119 such as an LED, so as to cause light to be reflected a plurality of times between the mixing electrode row 118 on the upper substrate 201 and the counter electrode 211 on the lower substrate 202. Thus the light path is made longer so as to prevent the analysis accuracy from being lowered. The electrodes of the analysis sections are preferably composed of opaque material with good reflecting properties, such as Cr or Au. Moreover, the light source 119 and a light receiving section 120 can be provided on the same upper surface side of each substrate for analysis, thus facilitating the optical alignment.

Generally, in the case of absorbance analysis, the larger the droplet volume, the longer the light path. Thus, the detection accuracy is improved. Hence, in the present invention, droplets are combined on the mixing electrodes 118 to increase the volumes of the combined droplets, and then the droplets are transported to the detection sections. In this case, small droplets are all previously mixed appropriately at the micro level without dispersion. Thus, the final mixing at the macro level can also be conducted relatively easily. Moreover, when a droplet with a large volume is handled by controlling the surface tension, the transportation rate is lowered. However, in the case of the present invention, small droplets are handled at positions other than those where handling of large droplets is required, so as to be able to prevent the analysis time from decreasing.

As shown in Fig. 6, a droplet 125 that has been detected is transported to a waste fluid port 113 by switching of the mixing electrode row 118 and then discharged outside each substrate for analysis 104 by a waste fluid probe 220. When the specific gravity of inert oil 207 filling the gap is larger than that of a liquid for analysis, the droplet 125 floats and can be easily removed by suction by placing the tip of a probe at the upper portion of the waste fluid port 113. Alternatively, as shown in the same figure, when a droplet remains in the gap, the droplet can be removed by suction by bending the waste fluid probe 220 into an L shape. In this case, by also providing the waste fluid probe 220 with a water-repellent and insulating film and electrodes, it becomes possible to transport droplets from analysis electrodes to the waste fluid probe. Furthermore, the electric current is monitored in a manner similar to that of the case of dispensing. Electric current does not flow in the presence of the tip of a waste fluid probe in inert oil, but it flows very weakly when it is in contact with a droplet. By the use of this phenomenon as a trigger, suction can be initiated. A waste fluid contains both a liquid for analysis and inert oil, but they can easily be separated from each other after the piping of the waste fluid probe. This can lead to a shortened total analysis time.

### Embodiment 2

Another embodiment is explained using Figs. 8 to 10. Figs. 8 and 9 are expanded top views of the substrates for analysis, and Fig. 10 is an expanded side view. The distribution ratio of a sample to a reagent when they are mixed differs depending on the analysis protocols. Thus, the mixed droplet size may significantly differ depending on the analysis protocols. At this time, if electrodes of the same size are placed so as to be evenly spaced apart, droplets may be too small so as not to be able to be in contact with adjacent droplets, or may be too large, so as to extend over a plurality of electrodes. Therefore, no electric fields can be applied, it will be impossible to control the surface tension, and liquid handling will be difficult. Hence, as shown in Fig. 8, by miniaturizing the electrodes to result in dotted microelectrodes 300 having, for example, sides with lengths between approximately several nanometers and several micrometers, and by providing a large number of such microelectrodes, it becomes possible for both a small-volume mixed liquid 303 and a large-volume mixed liquid 304 to be always in contact with electrodes. To which electrode switching should be directed is validated when a liquid volume is previously determined. This can also be performed by monitoring images or the electric current, the method of which is described in Embodiment 1. An electrode group 302 to which an electric field should be applied comprises electrodes on the under surface of a droplet or in the vicinity of such a droplet. By applying an electric field to these electrodes, it becomes possible to control the surface tension and to cause any small droplets to come into contact with electrodes. In the case of small droplets, the surface tension of such droplets can be effectively controlled, and the transportation of such droplets can be facilitated, so as to be able to contribute to a shortened analysis time. Preferably, the size of each of dotted electrode is, for example, equivalent to that of the gap between every two electrodes among the plurality of electrodes, so that a droplet has a shape that causes a change in wettability.

Excessive liquids are transported by an excessive-liquid-discharging electrode row 301 connected to a dispensing port to an excessive-liquid-discharging port (not shown) provided in each substrate for analysis and then discharged outside. In this manner, in the embodiments according to the present invention, liquids unnecessary for analysis can be easily discharged. This makes it possible to select a relatively low-cost liquid-sending method, such as a method that utilizes height differences as described above, where the accuracy of the liquid volume to be sent is poor.

A droplet moves on a large number of microelectrodes 300. At this time, in general, unless voltage is applied to a plurality of electrodes with which the droplet comes into contact, no change in the surface tension that is sufficient to cause the movement of the entire droplet can be generated. However, as shown in Fig. 9A, for example, an electric field is applied only to longitudinal deformation electrodes 305 consisting of upper and lower electrodes (as shown in the figure) that are among the electrodes with which a droplet comes into contact. The surface tension of this part alone changes, and a droplet is partially deformed and extends longitudinally. Next, by switching only to lateral deformation electrodes 306 consisting of a left electrode and a right electrode, a droplet extends laterally. By causing such an extension and contraction of a droplet, a flowing movement can be generated within the droplet. The internal uniformity of the droplet can thus be achieved, thereby significantly promoting mixing. Such extension and contraction may be caused when the motion of a droplet stops. Alternatively, as shown in Fig. 9B, a flowing movement for mixing may also be generated by applying an electric field to the lateral deformation electrodes 306 while laterally deforming and transporting a droplet. In this manner, it becomes possible to obtain a high mixing efficiency. Thus, a shortening of analysis time and an improvement in analysis accuracy are achieved.

Depending on differences in the droplet size due to different analysis protocols, the droplet deformation may differ not only in the horizontal direction of each substrate for analysis, but also in the depth (vertical) direction of the same. On such an occasion, a small-volume mixed droplet 303 does not come into contact with only one substrate, so that it becomes impossible to apply electric fields. Hence, as shown in Fig. 10, microelectrodes 307 are provided in the form of projections that are upright and vertical with respect to the substrates. Fig. 10A is a longitudinal cross-sectional view observed from the side along which a droplet is transported, and Fig. 10B is a cross-sectional view observed from the end face that is vertical with respect to the direction along which a droplet is transported. Such electrodes in the form of projections preferably project from the periphery, such that the projection is, for example, larger than the gap provided between every two electrodes among the plurality of electrodes but small enough so as not to be in contact with both plate members provided facing each other. In this manner, the small-volume mixed droplet 303 comes into contact with microelectrodes 307 in the form of projections, enabling the application of an electric field. Structurally, such microelectrodes 307 in the form of projections also come in contact with the large-volume mixed liquid 304, so that an electric field can be applied also to a large droplet without any difficulties. This makes it possible to handle small droplets and can contribute to the improvement of the analysis accuracy while shortening the analysis time.

## Claims

1. Chemical analysis apparatus, which is equipped with analysis sections having openings, means for supplying samples or reagents from the openings, mixing means for combining and mixing the samples with the reagents to obtain droplets (213) as liquids to be measured, and means (119, 120) for measuring the physical properties of the liquids to be measured during reaction or after completion of reaction, and having a mechanism wherein plate members (201, 202) are provided facing each other in said analysis sections, a plurality of electrodes (115, 116, 118, 211, 212, 214, 217, 218) are provided on the faces of the plates (201, 202) that face each other, and means (204) for supplying a voltage by the plurality of electrodes (115, 116, 118, 211, 212, 214, 217, 218) to the sample droplets and the reagent droplets (122).

2. Chemical analysis apparatus according to claim 1, wherein the analysis sections are equipped with a film (208) having an insulating effect and/or water-repellent effect disposed on the plurality of electrodes on the faces of the plate members (201, 202) that face each other.

3. Chemical analysis apparatus according to claim 1 or 2, wherein the tips of means (105) for supplying samples or reagents and/or means for discharging liquids are composed of electrically-conductive material, a film (208) having an insulating effect and/or water-repellent effect is provided on the tips, and the tips are connected with wires to the electrodes on the plate members (201, 202).

4. Chemical analysis apparatus according to any of claims 1 to 3, wherein the plate members of said analysis sections are provided with steps each of which is larger than a half of the gap between every two of the electrodes and smaller than the external size of a single electrode.

5. Chemical analysis apparatus according to any of claims 1 to 4, wherein a plurality of electrodes are provided on both plate members that are provided facing each other in said analysis sections.

6. Chemical analysis apparatus according to any of claims 1 to 5, wherein the plurality of electrodes in the analysis sections differ in shape, and specifically, wherein the electrodes in the vicinity of the openings (112, 121) differ in shape from the electrodes in the vicinity of the measurement means (119, 120).

7. Chemical analysis apparatus according to any of claims 1 to 6, wherein each of the plurality of electrodes in the analysis sections is larger than the gap between every two electrodes and projects from the periphery without being in contact with either of the plate members (201, 202) that face each other.

8. Chemical analysis apparatus according to any of claims 1 to 7, wherein the plurality of electrodes in the analysis sections are dotted electrodes, each of which is almost of the same size as that of the gap between every two electrodes.

9. Chemical analysis apparatus according to any of claims 1 to 8, wherein the plurality of electrodes provided in the analysis sections, specifically, ground electrodes and applicator electrodes in the analysis sections, are provided in such a manner that the order thereof on the top plate and that on the bottom plate are opposite.

10. Chemical analysis apparatus according to any of claims 1 to 9, wherein the electrodes of the analysis sections have a curvature radius that is smaller than the curvature radius of electrodes (212) placed closest to the openings (112) but have a curved part larger than that of the adjacent electrodes (214).

11. Chemical analysis apparatus according to any of claims 1 to 10, which has image processing means for conducting image processing of droplets formed from samples and reagents, by which image processing means the volumes of the droplets are determined and corrected at the time of measuring the droplets (123).

12. Chemical analysis apparatus according to any of claims 1 to 11, which has means for dividing samples and reagents supplied from the openings of the analysis sections into a large number of small droplets and dispensing the droplets at many separate times.
